(19) Europäisches Patentamt
European Patent Office
Office européen des brevets

(11) Publication number : **0 549 247 A1**

(12) **EUROPEAN PATENT APPLICATION**

(21) Application number : 92311478.9

(22) Date of filing : 16.12.92

(51) Int. Cl.$^5$ : **H04L 7/04, H04N 7/00**

(30) Priority : **23.12.91 KR 9123954**

(43) Date of publication of application :
**30.06.93 Bulletin 93/26**

(84) Designated Contracting States :
**DE FR GB**

(71) Applicant : **Samsung Electronics Co., Ltd.**
**416, Maetan-Dong, Kwonsun-Gu**
**Suwon-City, Kyungki-Do (KR)**

(72) Inventor : **Cho, Seong Jae**
**Samyoung Apt. A-205, 34-1 Anyand 2-Dong**
**Anyang-City, Kyungki-Do (KR)**

(74) Representative : **Read, Matthew Charles et al**
**Venner Shipley & Co. 20 Little Britain**
**London EC1A 7DH (GB)**

(54) **Sync detector.**

(57)   A serial register (SR2) receives input binary data. The outputs of the shift register (SR2) are exclusive ORed by exclusive OR gates (EXOR1, ..., EXOR64) with the bits of the inverse of a predetermined sync pattern. The outputs of the exlusive-OR gates (EXOR1, ..., EXOR64) are coupled to a common node by respective resistors (R). The common node is coupled to one input of a comparator (COMP1). The other input to the comparator (COMP1) is a reference voltage.

Errors in the input binary data result in the voltage at the common node dropping below logic "1". The reference voltage $V_r$ can be set so that a sync signal is generated by the comparator (COMP1) even when the input binary data includes errors.

FIG . 2

EP 0 549 247 A1

The present invention relates to a sync detector for detecting digital sync signals.

In transmitting and receiving digital signals, detecting a sync signal is based on controlling a signal and generating a timing signal. Accordingly, detection of the sync signal is very important. As a digital signal transmission method, D2 multiplexed analogue component (D2 MAC) broadcasting is typical. Figure 1 shows a conventional frame sync detecting circuit for the D2 MAC signal.

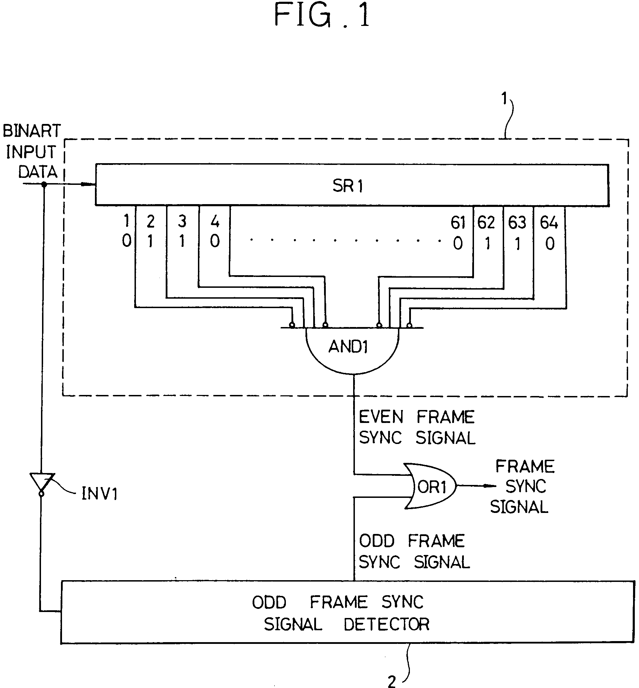

As shown in Figure 1, the conventional sync detecting circuit comprises determining means for producing logic signals indicating whether the bits of a digital signal correspond to respective bits of a predetermined pattens and means for producing a sync signal in response to the logic signals.

Even frame sync detecting portion 1 receives a serially input 64-bit binary data signal and shifts it by means of shift register SR1. Then, the outputs of shift register SR1 are logically multiplied by an AND gate AND1. A bit corresponding to "1", of the predetermined pattern, is directly input to AND gate AND1 while a bit corresponding to "0" is inverted and input to AND gate AND1. Thus, when a desired sync signal is present, an even frame sync signal is detected at the output of AND gate AND1.

A 64-bit binary data signal is inverted by an inverter INV1 and applied to an odd frame sync detecting portion 2 having the same constitution as that of even frame sync detecting portion 1, to thereby detect an odd frame sync signal.

The even frame sync signal and the odd frame sync signal are logically summed by an OR gate OR1, thereby producing a combined sync signal. However, such a conventional sync detection circuit cannot perform the sync detection, if even one error bit is present within the lengthy sync bits.

The present invention overcomes this disadvantage. It does this by providing a sync detector for detecting digital sync signals wherein the determining means includes summing means for determining an analogue sum of the logic signals, and the means for producing a sync signal includes comparator means for comparing the sum with a reference value and outputting a sync signal in dependence of the result of the comparison.

An advantage of the present invention is that the reference value may be selected such that a sync signal is produced even when errors have occurred in the digital signal.

Preferably, the summing means comprises a plurality of resistors arranged to apply respective logic signals to a common node.

Preferably, the determining means includes a plurality of exclusive OR gates for comparing bits of the digital signal with respective bits of the predetermined pattern to produce the logic signals.

In a preferred embodiment, the reference value is less than the value representing a perfect match between the digital signal and the predetermined pattern.

In systems such as D2 MAC having distinct odd and even frame sync patterns, the elements of the invention, described above, will be duplicated and combining means provided to combine the even and odd sync signals into a single combined sync signal.

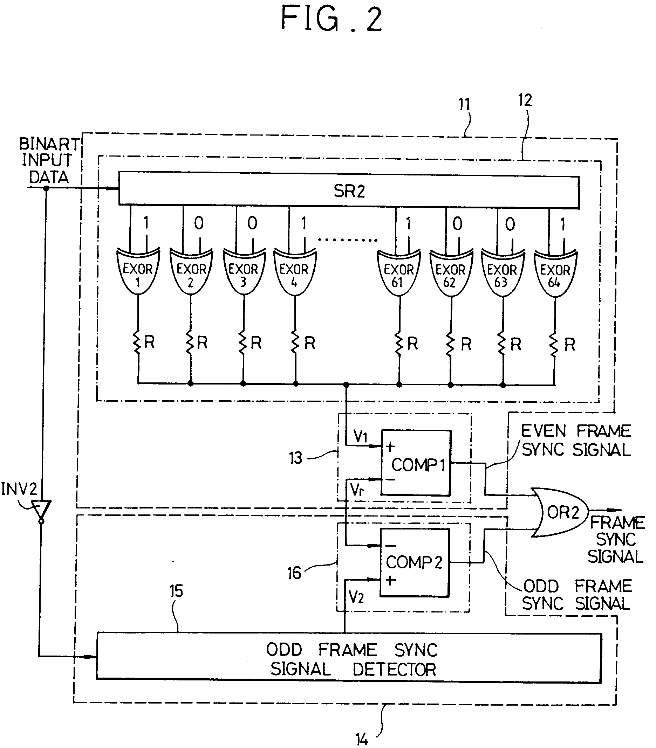

An embodiment of the present invention will now be described, by way of example, with reference to Figure 2 of the accompanying drawings, in which:

Figure 1 is a circuit diagram of a conventional sync detector for receiving digital signals; and

Figure 2 is a circuit diagram of a sync detector for receiving digital signal of a preferred embodiment of the present invention.

In Figure 2, an even frame sync detecting portion 11 comprises a first summing portion 12, including a shift register SR2 for shifting an input 64-bit binary data signal, exclusive OR gates EXOR1 to EXOR64 for exclusively logically summing each of the parallel outputs from shift register SR2 and respective bits of fixed data and sixty four resistors R which are connected to each of the exclusive OR gates EXOR1 to EXOR64 to obtain a summed voltage by summing the outputs of exclusive OR gates, and a first sync signal recognition portion 13 including a first comparator COMP1 for comparing the summed voltage and a first preset reference voltage and obtaining an even frame sync signal. An odd frame sync detecting portion 14 comprises a second summing portion 15 having the same constitution as that of first summing portion 11 for receiving a binary data input signal inverted by an inverter INV2, and a second sync signal recognition portion 16 including a second comparator COMP2 for comparing the summed voltage and a second preset reference voltage and obtaining an odd frame sync signal. The outputs from even frame sync detecting portion 11 and odd frame sync detecting portion 12 are connected to an OR gate OR2 for logically summing the even frame sync signal and the odd frame sync signal, to thereby obtain a complete frame sync signal.

The present invention will be described with reference to frame sync detection for a D2 MAC signal.

A serially received binary data input signal is composed fo 64 bits which are arranged as "0110 . . . . 0110". The 64-bit binary data input signal is shifted through the shift register SR2, of which each of the parallel outputs is input to a respective exclusive OR gate EXOR1 to EXOR64 together with each bit of the inverted binary data input signal, to compare the input bits. Each of the outputs is connected to a respective resistor R, to obtain a summed output voltage. When the shift register output data is different from the fixed data, the output of each of exclusive OR gates EXOR1 to EXOR64 becomes "high" while when the former is the same as the latter, it becomes "low". Assuming that a "high" voltage is "V" and a "low" voltage is "O", when a "high" voltage is output, a voltage $V_1$ across one of exclusive OR gates is calculated as follows:

$$V_1 = \frac{R/63 \cdot V}{R + R/63} = \frac{V}{64}$$

Here, when all the outputs from the exclusive OR gates EXOR1 to EXOR64 are "high", that is, when the sync bits are completely matched, $V_1$ becomes V by calculating it as follows:

$$V_1 = V/64 \times 64 = V$$

Thus, when 3 error bits occur in the input signal, it can be seen that $V_1$ becomes $61 \cdot V/64$. Accordingly, the number of error bits which can be accommodated is dependant on the value of the refererence voltage $V_r$ of comparators COMP1 and COMP2. For example, when $V_r$ is about 60V/64, even if about 4 error bits occur, the input signal can be recognized as a synchronization signal.

Since the odd frame sync detection portion 14 operates in the same way as that of even frame sync detection portion 11, the explanation thereof is omitted. In Figure 2, reference numeral $V_2$ represents the output voltage of second summing portion 15.

As described above, using the present invention, even if a predetermined number of error bits occur within the sync bits, sync detection is possible. In addition, by adjusting a reference voltage, the permitted number of the error bits can be selected. Accordingly, it improves the likelihood of the sync detection being achieved.

**Claims**

1. A sync detector for detecting digital sync signals, comprising:
   determining means (12, 15) for producing logic signals indicating whether the bits of the digital signal corresponding to respective bits of a predetermined pattern; and
   means (13, 16) for producing a sync signal in response to the logic signals,
   **characterised in that**
   the determining means (12, 15) includes summing means (R) for determining an analogue sum of the logic signals, and
   the means (13, 16) for producing a sync signal includes comparator means (13, 16) for comparing the sum with a reference value (Vr) and outputting a sync signal in dependence on the result of the comparison.

2. A sync detector according to claim 1, wherein the summing means (R) comprises a plurality of resistors (R) arranged to apply respective said logic signals to a common node.

3. A sync detector according to claim 1 or 2, wherein the determining means (12, 15) includes a plurality of exclusive-OR gates (EXOR1, ..., EXOR64) for comparing bits of the digital signal with respective bits of the predetermined pattern to produce the logic signals.

4. A sync detector according to any one of claims 1, 2 or 3, wherein the reference value $V_r$ is less than a value representing a perfect match between the digital signal and the predetermined pattern.

5. A sync detector according to any preceding claim, including determining means (12) and means (13) for producing a sync signal for detecting even frame sync signal, determining means (15) and means (16) for producing a sync signal for detecting odd frame sync signal and combining means (OR2) for combining the even and odd frame sync signals to produce a combined frame sync signal.

6. A sync detector for receiving digital signals comprising:
   an even frame sync detector having first summing means for obtaining a first summed output voltage which has a different value in dependent on the number of error bits within an input digital signal, and first sync signal recognition means for recognizing a voltage of said first summing means as a synchronization irrespective of the number of said error bits if the voltage of said first summing means becomes more than a first predetermined level;
   an odd frame sync detector having second summing means for receiving an inverted signal of said input digital signal and obtaining a second summed output voltage which has a different value in dependent on the number of error bits within said inverted signal, and second sync signal recognition means for recognizing a voltage of said second summing means as a synchronization irrespective of the number of said error bits if the voltage of said second summing means becomes more than a second predetermined level; and
   logical operation means for logically operating the outputs from said even frame sync detector and said odd frame sync detector and generating a frame sync signal.

7. The sync detector for receiving digital signals according to claim 6, wherein each of said first summing means comprises a shift register for shifting the input digital signal, a gate group which is composed of a plurality of gates connected in parallel to each other and which is connected to each parallel output terminal of said shift register for exclusively logically summing each of said parallel outputs of said shift register and a fixed data corresponding to each parallel output and a resistor group which is composed of a plurality of resistors connected in parallel to each other and which is connected to each output terminal of said gates for summing the outputs.

8. The sync detector for receiving digital signal according to claim 6, wherein each of said first sync signal recognition means and second sync signal recognition means comprises a comparator for comparing the corresponding summed output voltage with a reference voltage and generating a compared result.

9. The sync detector for receiving digital signal according to claim 8, wherein a reference voltage of said comparator is set lower than said summed output voltage in case of a completely matched sync signal.

10. The sync detector for receiving digital signals according to claim 6, wherein said logical operation means comrpises an OR gate.

# FIG . 1

1

BINART
INPUT
DATA

| SR1 |
|---|

| 1 | 2 | 3 | 4 | . . . . . . . . . . . | 61 | 62 | 63 | 64 |
|---|---|---|---|---|---|---|---|---|
| 0 | 1 | 1 | 0 | | 0 | 1 | 1 | 0 |

AND1

EVEN FRAME
SYNC SIGNAL

OR1 → FRAME
SYNC
SIGNAL

INV1

ODD FRAME
SYNC SIGNAL

ODD FRAME SYNC
SIGNAL DETECTOR

2

# FIG.2

BINART
INPUT
DATA

SR2

1  0  0  1  ....  1  0  0  1

EXOR 1  EXOR 2  EXOR 3  EXOR 4  EXOR 61  EXOR 62  EXOR 63  EXOR 64

R  R  R  R  R  R  R  R

11  12

13  $V_1$  + COMP1  $V_r$  —  EVEN FRAME SYNC SIGNAL

INV2

16  — COMP2  +  $V_2$

15

OR2  FRAME SYNC SIGNAL

ODD FRAME SYNC SIGNAL

ODD FRAME SYNC SIGNAL DETECTOR

14

**European Patent Office**

## EUROPEAN SEARCH REPORT

Application Number

EP 92 31 1478

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | IEEE JOURNAL OF SOLID-STATE CIRCUITS vol. 23, no. 3, June 1988, NEW YORK, NY, US pages 625 - 629 O'LEARY ET AL '10-MHz 64-bit Error-Tolerant Signature Recognition Circuit' | 1,3,4 | H04L7/04 H04N7/00 |
| Y A | * paragraph 3; figure 1 * | 2,5 6-10 | |
| Y A | PATENT ABSTRACTS OF JAPAN vol. 5, no. 163 (E-078)20 October 1981 & JP-A-56 093 452 ( NEC ) * abstract * | 1-4 6-10 | |
| Y | DE-A-2 223 465 (COMMUNICATIONS SATELLITE CORP) * page 6, line 5 - line 12; figure 1 * | 1-4 | |
| Y | PATENT ABSTRACTS OF JAPAN vol. 14, no. 401 (E-971)30 August 1990 & JP-A-21 51 144 ( OKI ELECTRIC IND CO ) * abstract * | 5 | TECHNICAL FIELDS SEARCHED (Int. Cl.5) H04L H04N |

The present search report has been drawn up for all claims

| Place of search | Date of completion of the search | Examiner |
|---|---|---|
| BERLIN | 01 APRIL 1993 | JONSSON B. |

EPO FORM 1503 03.82 (P0401)

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document